# EUROPEAN PATENT SPECIFICATION

(11) **EP 1 279 879 B1**
(45) Date of publication and mention of the grant of the patent: **25.02.2004**
(21) Application number: 01202850.2
(22) Date of filing: 25.07.2001
(51) Int. Cl.: F16L 33/207

(54) **Assembly for the coaxial attachment of a pipe to a fitting**
Anordnung zum axialen Verbinden von einem Rohr mit einer Armatur
Ensemble pour la connexion axiale d'un tuyau avec un élément de jonction

(43) Date of publication of application: 29.01.2003
(73) Proprietor: Technopolis Projects Inc., B.V.I., Tortola, British Virgin Islands (VG)
(72) Inventor: Bandi, Hans, 6780 Airolo (CH)
(74) Representative: Fiammenghi-Domenighetti, Delfina

(56) References cited:
- FR-A- 1 393 884
- FR-A- 2 407 415
- GB-A- 828 912

## Description

The present invention relates to the technological field of precision fittings, that is to assemblies made up of various components that bring about the hermetic coaxial attachment of a pipe to the ribbed end portion of a fitting that has an abutment flange.

In the state of the art, examples of which are provided by patents EP-0477704 B1 and EP-015999781, an assembly of the abovementioned type is composed of a sleeve placed coaxially around the outside of the pipe, and a generally cylindrical coaxial ring inserted between the pipe and the said sleeve.

When the sleeve is slid towards the said abutment flange, it takes with it in the same direction the abovementioned ring, which, as it moves, also exerts radial pressure on the pipe contained coaxially inside itself. This pressure has the effect of plastically deforming the inside surface of the pipe so that it conforms to the abovementioned ribbed surface of the end portion of the fitting, which is usually in the form of an alternation of annular reliefs of semicircular cross section. In other, simpler embodiments of the prior art, the abovementioned generally cylindrical ring is not used, and the attachment assembly comprises only a sleeve inside which the pipe is expanded before attaching it with force to the corresponding fitting.

In the field of application in question, the pipes to be attached to fittings are mostly made of metallic or plastic materials, and in either case the above systems which are currently used have drawbacks or limitations to their functional reliability.

The more simple system, the last described above, is functional only when attaching plastic pipes, not when attaching metallic pipes, because, owing to the great pressure of the pipe on the fitting caused by the thermal dilation of the tube, if the pipe is carrying fluid at high temperatures the hermetic seal of the joint can no longer be reliably guaranteed.

On the other hand, the system described initially, comprising the said generally cylindrical ring, is effective for joining metallic pipes but not plastic pipes, which, in the presence of high temperatures, suffer shrinking and/or yielding which the ring (which is usually metal) cannot compensate for in as much as its elastic reaction, especially opposed as it is by its thermal dilation, is insufficient for the task.

The inventor of the present invention has devised an assembly that overcomes the drawbacks and limitations described thus far, in as much as it is provided with a second ring inserted coaxially between the said sleeve and the said generally cylindrical ring, which provides a greater elastic reaction and also ensures the uniformity of the radial pressure along the whole length of pipe contained inside the sleeve, unlike other systems, which do not guarantee such uniformity towards the ends of the generally cylindrical ring, which deform under the radial stresses to which they are subjected.

By giving an appropriate slightly conical shaping to the outer surface of the ring, the inventor also achieves an exact and automatic centring of the various parts that go to make up an assembly according to the invention.

The subject of the present invention is therefore an assembly for the coaxial attachment of a pipe to the outside of the end portion of a fitting, as described in the preamble of the accompanying Claim 1, characterized by the matter set forth in the characterizing part of the same claim.

The advantages presented by an assembly produced in accordance with the invention will be evident from the more detailed description given hereinbelow concerning a preferred embodiment, chosen by the inventor from among the numerous embodiments obtainable by those skilled in the art following the teachings contained in the accompanying claims. This description will also refer to the accompanying drawings, which show:
- in figure 1, a longitudinal section through part of the said illustrative embodiment of an assembly according to the invention with all the parts assembled together;
- in figure 2, an enlarged and partially sectioned side view of an assembly according to the invention in an exploded view, i.e. with the various parts lined up before assembly.

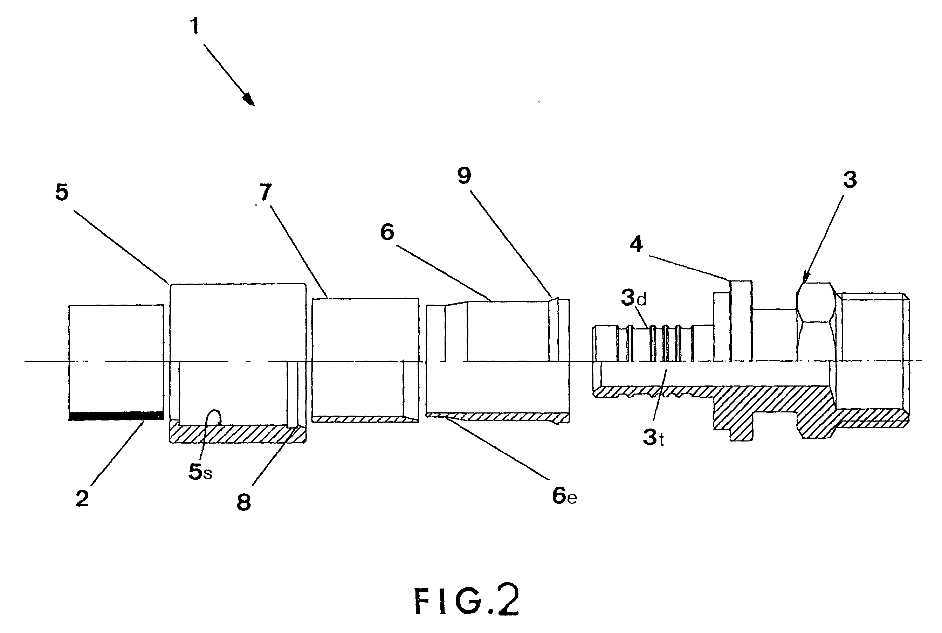

Taking the abovementioned figure 2 first, this shows that the assembly 1 of the invention, which is to provide the attachment of a pipe 2 to the ribbed surface 3d of the end portion 3t of a fitting 3, with an abutment flange 4, is essentially composed of a sleeve 5 mounted coaxially around the outside of a first, generally cylindrical ring 6. Between this ring and the said sleeve 5 a second cylindrical ring 7 is inserted coaxially and without play.

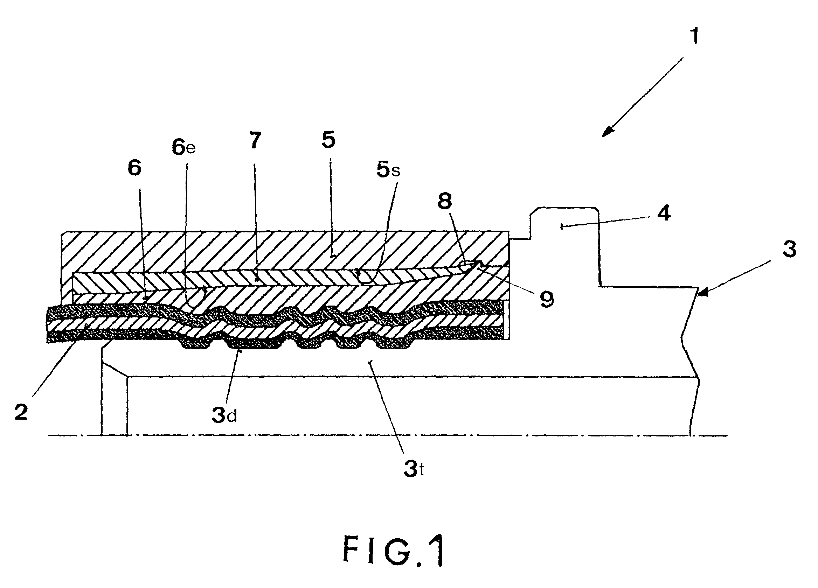

If the sleeve 5 is pulled in the direction of the longitudinal axis of the fitting 3, the second ring 7 and the first ring 6 are drawn along with it and penetrate coaxially one inside the other, as can be seen in figure 1. The said first generally cylindrical ring 6, which as it slides axially exerts a uniform radial pressure along the whole length of the section of pipe in contact with it, causes it to conform hermetically, by partially or totally plastic deformation, to the abovementioned ribbed surface 3d of the end portion 3t of the fitting 3, and the sleeve 5 stops its axial movement when it meets the abutment flange 4 of this fitting 3.

To provide a self-centring effect on the various component parts, the inventor suggests advantageously shaping the outer surface 6e of the said generally cylindrical ring 6, by giving it a slight flare opening out towards the abutment flange 4. The result is an assembly that achieves all the objects addressed by the inventor.

To prevent the sleeve 5 coming off, the inventor suggests providing the inner surface 5s with an annular recess 8 suitable for accommodating, when the sleeve 5 is in contact with the abutment flange 4, an annular relief 9 formed on the outer surface of the said generally cylindrical ring 6. This will prevent the sleeve 5 from coming off, whether or not it is rotated, without the need for further provisions (extra parts formed on the sleeve and on the abutment flange, knurling and so on) which are necessary in the current examples of the state of the art.

## Claims

1. Assembly (1) for the coaxial attachment of a pipe (2) to the outside of the end portion (3t) of a fitting (3) having a ribbed surface (3d) and an abutment flange (4), attachment being achieved by sliding axially towards the said abutment flange (4) a coaxial sleeve (5), inside which is accommodated a first generally cylindrical ring (6) which is thus pressed radially against the said pipe (2), causing it to conform by plastic deformation to the said ribbed surface (3d) of the said end portion of the fitting (3), the assembly being **characterized in that**, between said sleeve (5) and said first generally cylindrical ring (6), there is inserted without play a second cylindrical ring (7) that is coaxially contained between the first generally cylindrical ring (6) and the said sleeve (5).

2. Assembly according to Claim 1, in which the inner surface (5s) of the said sleeve (5) is provided with an annular recess (8) to accommodate an annular relief (9) formed on the outer surface of the said generally cylindrical ring (6).

3. Assembly according to one of the preceding claims, in which the outer surface (6e) of the said generally cylindrical ring is inclined outwards towards the said limiting abutment flange (4), in order to provide a self-centring effect.

## Patentansprüche

1. Baugruppe (1) zur koaxialen Befestigung eines Rohres (2) an der Außenseite des Endabschnittes (3t) eines Rohrverbindungsstückes (3), das eine gerippte Oberfläche (3d) und einen Widerlagerflansch (4) besitzt, wobei die Befestigung durch axiales Verschieben einer koaxialen Hülse (5) zu dem Widerlagerflansch (4) hin erreicht wird, wobei im Inneren der Hülse (5) ein erster, im allgemeinen zylindrischer Ring (6) aufgenommen ist, der radial gegen das Rohr (2) gepresst wird, wodurch das Rohr (2) durch plastische Deformation an die gerippte Oberfläche (3d) des Endabschnittes (3t) des Rohrverbindungsstückes (3) angepasst wird,
**dadurch gekennzeichnet,**
**dass** zwischen der Hülse (5) und dem ersten, im allgemeinen zylindrischen Ring (6) ohne Spiel ein zweiter zylindrischer Ring (7) eingefügt ist, der koaxial zwischen dem ersten, im allgemeinen zylindrischen Ring (6) und der Hülse (5) aufgenommen ist.

2. Baugruppe nach Anspruch 1, wobei die Innenoberfläche (5s) der Hülse (5), zum Aufnehmen eines ringförmigen Reliefs (9), das an der Außenoberfläche des im allgemeinen ringförmigen Ringes (6) ausgebildet ist, mit einer ringförmigen Aussparung (8) versehen ist.

3. Baugruppe nach einem der vorhergehenden Ansprüche, wobei die Außenoberfläche (6e) des im allgemeinen ringförmigen Ringes (6) zum begrenzenden Widerlagerflansch (4) hin nach außen geneigt ist, um eine Selbstzentrierung zu ergeben.

## Revendications

1. Ensemble (1) pour la fixation coaxiale d'un tuyau (2) au côté extérieur de la partie d'extrémité (3t) d'un appareillage (3) présentant une surface cannelée (3d) et une collerette de butée (4), cette fixation étant réalisée par coulissement axial vers la dite collerette de butée (4), d'un manchon coaxial (5), à l'intérieur duquel est logé un premier anneau (6) de forme générale cylindrique qui est alors pressé radialement contre le dit tuyau (2), le faisant se conformer par déformation plastique à la dite surface cannelée (3d) de la dite partie d'extrémité de l'appareillage (3), l'ensemble étant **caractérisé en ce que**, entre le dit manchon (5) et le dit premier anneau (6) de forme générale cylindrique, est introduit sans jeu un second anneau cylindrique (7) qui est contenu coaxialement entre le premier anneau (6) de forme générale cylindrique et le dit manchon (5).

2. Ensemble selon la revendication 1, dans lequel la surface intérieure (5s) du dit manchon (5) présente une partie creuse annulaire (8) pour recevoir une saillie annulaire (9) formée sur la surface extérieure du dit anneau de forme générale cylindrique (6).

3. Ensemble selon l'une des revendications précédentes, dans lequel la surface extérieure (6e) du dit anneau de forme générale cylindrique est inclinée vers l'extérieur en direction de la dite collerette de butée de limitation (4), de façon à produire un effet d'auto-centrage.
